# FASCICULE DE BREVET EUROPEEN

(11) **EP 3 181 408 B1**
(45) Date de publication et mention de la délivrance du brevet: **02.05.2018**
(21) Numéro de dépôt: 16203532.3
(22) Date de dépôt: 12.12.2016
(51) Int. Cl.: B60R 16/03, B60Q 1/26

(54) **FEU ARRIÈRE DE VÉHICULE, SYSTÈME DE SIGNALISATION ET D ÉCLAIRAGE DE VÉHICULE ET VÉHICULE**
RÜCKLICHT EINES FAHRZEUGS, SIGNALISIERUNGS- UND BELEUCHTUNGSSYSTEM EINES FAHRZEUGS UND ENTSPRECHENDES FAHRZEUG
VEHICLE REAR LIGHT, SIGNALLING AND LIGHTING SYSTEM FOR VEHICLE AND VEHICLE

(30) Priorité: 15.12.2015 FR 1562387
(43) Date de publication de la demande: 21.06.2017
(73) Titulaire: Vignal Systems, 69960 Corbas (FR)
(72) Inventeur: Dupuis, Guillaume, 69100 Villeurbanne (FR)
(74) Mandataire: Delorme, Nicolas

(56) Documents cités:
- EP-A1- 1 298 009
- EP-A1- 2 172 371
- WO-A2-02/062623
- FR-A3- 2 917 347
- US-A1- 2010 019 689

## Description

La présente invention concerne un feu arrière de véhicule et un système de signalisation et d'éclairage de véhicule comprenant un tel feu. L'invention concerne également un véhicule comportant un tel feu ou un tel système de signalisation et d'éclairage. Un tel feu arrière de véhicule est par exemple connu du EP 2 172 371 A. Les véhicules, et notamment les véhicules lourds comme les camions tracteurs ou porteurs, sont équipés de feux arrières dotés de plusieurs fonctions de signalisation lumineuse. Un feu arrière de véhicule comprend typiquement un boîtier qui contient plusieurs sources lumineuses ainsi qu'un circuit d'alimentation de ces sources lumineuses, destiné à être relié à un faisceau de câbles du véhicule. Une unité de commande logée dans le boîtier est reliée à un support de communication multiplexé du faisceau de câbles, tel qu'un bus CAN ou un bus Lin, et peut en fonction des informations reçues activer la ou les sources lumineuses appropriée(s).

En pratique, le feu arrière gauche et le feu arrière droit du véhicule peuvent être reliés au même faisceau de câbles, celui-ci comprenant un câble d'alimentation positive, un câble de masse, et au moins un câble d'un support de communication multiplexé.

Suite à une commande, qui peut typiquement être donnée par le conducteur du véhicule, la source lumineuse correspondante peut être activée à la fois dans le feu arrière gauche et dans le feu arrière droit. Tel est le cas notamment du feu de position.

Toutefois, certaines sources lumineuses ne doivent être activées que dans un seul des feux arrière, selon la commande reçue. Cela est tout particulièrement le cas de l'indicateur de direction.

Afin que cette source lumineuse ne soit activée que dans le feu arrière souhaité (c'est-à-dire le feu arrière gauche ou le feu arrière droit), il est prévu un moyen de différenciation des feux arrière. Ainsi, tous les feux destinés à être positionnés d'un côté donné du véhicule - par exemple à gauche - se différencient des feux destinés à être positionnés de l'autre côté du véhicule - à droite dans cet exemple. A cet effet, on peut prévoir différentes solutions, parmi lesquelles :
- l'ajout, dans le feu, d'un composant qui ne modifie pas le fonctionnement du feu (par exemple une résistance), mais qui peut être détecté par l'unité de commande, l'unité de commande étant ainsi apte à déterminer s'il s'agit d'un feu gauche - lorsque le composant est présent par exemple - ou d'un feu droit - lorsque le composant n'est pas présent ;
- la programmation différente de l'unité de commande entre le feu gauche et le feu droit.

Ces deux solutions, données à titre d'exemple, permettent à l'unité de commande de déterminer si le feu auquel elle appartient est un feu gauche ou un feu droit. En conséquence, selon la commande reçue via le faisceau, l'unité de commande va activer la source lumineuse considérée, ou non.

Ainsi, en pratique, de façon classique, les feux arrière gauches et les feux arrière droits sont différents. Ceci se traduit par d'importantes contraintes de stockage et de référencement, et génère des risques de montage inversé.

La présente invention vise à remédier aux inconvénients mentionnés ci-dessus.

A cet effet, et selon un premier aspect, l'invention concerne un feu arrière de véhicule, comprenant :
- un boîtier ;
- une pluralité de sources lumineuses disposées dans le boîtier, parmi lesquelles au moins une source lumineuse dont l'activation dépend du positionnement latéral du feu sur le véhicule ;
- un connecteur monté sur le boîtier, pour permettre le raccordement à un faisceau de câbles du véhicule, le connecteur possédant :
   - une première borne d'alimentation et une deuxième borne d'alimentation destinées à être raccordées l'une à un câble d'alimentation positive du faisceau et l'autre à un câble de masse du faisceau ;
   - au moins une borne de communication, destinée à être raccordée à un câble d'un support de communication multiplexé du faisceau, tel qu'un bus CAN ou un bus Lin ;
- un circuit d'alimentation logé dans le boîtier, reliant chacune des sources lumineuses à la première et à la deuxième bornes d'alimentation ;
- une unité de commande logée dans le boîtier, qui est reliée à la ou à chaque borne de communication, et qui est agencée pour pouvoir commander l'activation d'une ou de plusieurs sources lumineuses.

Selon une définition générale de l'invention, le circuit d'alimentation comporte un module qui possède un premier noeud d'entrée relié à la première borne d'alimentation, un deuxième noeud d'entrée relié à la deuxième borne d'alimentation, et un noeud de sortie relié aux sources lumineuses, le module comportant :
- un dispositif redresseur, configuré pour délivrer au noeud de sortie une tension d'alimentation égale à la valeur absolue de la tension entre les première et deuxième bornes d'alimentation, en fonctionnement ;
- un dispositif de détection de polarité, connecté à l'unité de commande, et configuré pour fournir à cette dernière une donnée indiquant laquelle des première et deuxième bornes d'alimentation est raccordée à un câble d'alimentation positive, en fonctionnement.

De façon concrète, les deux feux arrière - gauche et droit - seront connectés au même faisceau de câbles du véhicule, mais l'un de ces feux possédera un branchement inversé par rapport à l'autre feu. Par exemple, le feu arrière gauche sera branché de façon « normale », c'est-à-dire avec sa première borne d'alimentation reliée au câble d'alimentation positive du faisceau et sa deuxième borne d'alimentation reliée au câble de masse du faisceau, tandis que le feu arrière droit sera branché de façon « inversée », c'est-à-dire avec sa première borne d'alimentation reliée au câble de masse et sa deuxième borne d'alimentation reliée au câble d'alimentation positive.

Malgré le branchement inversé, le feu arrière droit pourra fonctionner normalement. En effet, le dispositif redresseur permet de fournir une tension positive aux sources lumineuses, quel que soit le sens de branchement du feu. En outre, le dispositif de détection de polarité permet d'indiquer à l'unité de commande le sens de branchement du feu, c'est-à-dire permet d'indiquer si le feu est monté en tant que feu gauche ou en tant que feu droit. L'unité de commande, ayant identifié si le feu auquel elle appartient est un feu gauche ou un feu droit, pourra donc, selon les informations reçues via le support de communication multiplexé du faisceau, activer ou non la source lumineuse concernée.

L'invention permet ainsi d'avoir un unique type de feu - tant du point de vue des organes qu'il contient que de la programmation de son unité de commande - que ce feu soit destiné à être monté à gauche ou à droite à l'arrière d'un véhicule. Par conséquent, l'invention simplifie le stockage des feux ainsi que leur montage. L'invention permet toutefois un fonctionnement différencié du feu arrière gauche et du feu arrière droit, indispensable en particulier en ce qui concerne l'activation de certaines sources lumineuses comme les indicateurs de position.

En pratique, la source lumineuse dont l'activation dépend du positionnement latéral du feu sur le véhicule peut appartenir au groupe comprenant : un indicateur de direction, un flasheur. Un flasheur comporte plusieurs groupes de sources lumineuses qui sont activés individuellement et séquentiellement, selon une séquence prédéterminée. On peut notamment prévoir que les groupes de sources lumineuses puissent être activés selon un sens allant du plan longitudinal médian du véhicule en direction des faces latérales du véhicule (c'est-à-dire « vers l'extérieur »). Ce sens est donc inversé entre un feu arrière gauche et un feu arrière droit.

Selon une réalisation possible, le dispositif redresseur comprend un pont de diodes.

La donnée fournie par le dispositif de détection de polarité peut être une tension, ladite tension prenant une première valeur (V1) si la première borne d'alimentation est raccordée à un câble d'alimentation positive, et prenant une deuxième valeur (V2) différente de la première valeur (V1) si la deuxième borne d'alimentation est raccordée à un câble d'alimentation positive. En conséquence, selon que l'unité de commande reçoit du dispositif de détection de polarité la valeur V1 ou la valeur V2, cette unité de commande peut déterminer le sens du branchement du feu auquel elle appartient, et ainsi déterminer si ce feu est monté à gauche ou à droite du véhicule.

On peut prévoir que la première valeur (V1) soit sensiblement égale à zéro, et/ou que la deuxième valeur (V2) soit sensiblement égale à la valeur absolue de la tension entre les première et deuxième bornes d'alimentation.

Selon une réalisation possible, le feu peut comprendre un connecteur additionnel qui comporte :
- au moins trois bornes d'entrée, pour permettre le raccordement à un faisceau du véhicule, à savoir :
   - une première borne d'entrée destinée à être raccordée à un câble d'alimentation positive du faisceau et une deuxième borne d'entrée destinée à être raccordée à un câble de masse du faisceau ;
   - au moins une borne de communication en entrée, destinée à être raccordée à un câble d'un support de communication multiplexé du faisceau ;
- au moins trois broches de sortie, pour permettre le raccordement aux bornes du connecteur monté sur le boîtier, à savoir :
   - une première broche de sortie destinée à coopérer avec la première borne d'alimentation du connecteur, et une deuxième broche de sortie destinée à coopérer avec la deuxième borne d'alimentation du connecteur;
   - au moins une broche de communication en sortie ;
le connecteur additionnel étant conformé de telle sorte que la première borne d'entrée est reliée à la deuxième broche de sortie, et la deuxième borne d'entrée est reliée à la première broche de sortie.

Ainsi, avec cette réalisation, une inversion de branchement est réalisée dans le connecteur additionnel, c'est-à-dire au niveau d'un organe qui est généralement fourni au constructeur du véhicule avec le feu arrière. En d'autres termes, la fonction d'inversion du branchement est intégrée au feu - ou plus précisément intégrée au connecteur additionnel lui-même monté sur le feu. En revanche, le faisceau du véhicule peut rester inchangé.

Il est précisé que, dans tout le présent texte, les termes « borne » et « broche » ne présument pas d'une forme particulière de la pièce considérée, telle qu'une forme en creux ou en saillie. L'utilisation de termes distincts permet simplement de distinguer ces pièces dans la description de l'invention, étant précisé que ces pièces sont conçues pour coopérer.

Selon un deuxième aspect, l'invention concerne un système de signalisation et d'éclairage de véhicule, comprenant :
- un feu arrière gauche et un feu arrière droit, les feux étant tels que précédemment décrits ;
- un ensemble de liaison pour raccorder un système de gestion du véhicule à chacun des feux, ledit ensemble de liaison comportant :
   - un faisceau de câbles qui inclut un câble d'alimentation positive, un câble de masse, et au moins un câble d'un support de communication multiplexé, tel qu'un bus CAN ou un bus Lin, le faisceau de câbles étant destiné à être relié à un système de gestion du véhicule ;
   - un dispositif de connexion entre le faisceau et chacun des feux, chaque dispositif de connexion comportant au moins trois broches qui sont reliées chacune à un câble du faisceau et qui sont aptes à être reliées aux bornes du connecteur du feu ;

De plus, le feu arrière gauche et le feu arrière droit sont identiques; le dispositif de connexion de l'un des feux est configuré de sorte que la première borne d'alimentation du connecteur de ce feu soit reliée au câble d'alimentation positive du faisceau ; et le dispositif de connexion de l'autre des feux est configuré de sorte que la première borne d'alimentation du connecteur de ce feu soit reliée au câble de masse du faisceau.

Comme exposé précédemment, l'inversion du branchement pour l'un des feux seulement, combinée à la présence dans le feu d'un dispositif redresseur et d'un dispositif de détection de polarité, rend possible le fait de n'avoir qu'un seul type de feu, pour une mise en place indifféremment à gauche ou à droite du véhicule. Ainsi, on peut avoir des feux arrière gauche et droit identiques - tant du point de vue de leur géométrie et des organes qu'ils contiennent que de la programmation de leurs unités de commande. Le montage de ces feux gauche et droit s'effectue de façon symétrique, du point de vue géométrique, et de façon inversée, du point de vue électrique.

Par exemple, chacun des dispositifs de connexion comprend un embout qui est fixé sur le faisceau, et qui comporte :
- une première borne d'entrée raccordée au câble d'alimentation positive du faisceau et une deuxième borne d'entrée raccordée au câble de masse du faisceau ;
- au moins une borne de communication en entrée, raccordée au câble ou à l'un des câbles du support de communication multiplexé du faisceau ;
- une première broche de sortie apte à être reliée à la première borne d'alimentation du connecteur du feu, et une deuxième broche de sortie apte à être reliée à la deuxième borne d'alimentation du connecteur du feu ;
- au moins une broche de communication en sortie, apte à être reliée à la borne de communication du connecteur du feu.

Le terme « relié » n'implique pas une liaison directe. Une pièce intermédiaire peut être prévue.

Selon une réalisation, l'un des dispositifs de connexion :
- est configuré de telle sorte que, dans l'embout, la première borne d'entrée est reliée à la première broche de sortie, et la deuxième borne d'entrée est reliée à la deuxième broche de sortie ;
- et comprend de plus un connecteur additionnel qui comporte :
   - une première borne d'entrée raccordée à la première broche de sortie de l'embout, et une deuxième borne d'entrée raccordée à la deuxième broche de sortie de l'embout ;
   - au moins une borne de communication en entrée, raccordée à une broche de communication en sortie de l'embout ;
   - une première broche de sortie destinée à coopérer avec la première borne d'alimentation du connecteur du feu, et une deuxième broche de sortie destinée à coopérer avec la deuxième borne d'alimentation du connecteur du feu ;
   - au moins une broche de communication en sortie ;
le connecteur additionnel étant conformé de telle sorte que sa première borne d'entrée est reliée à sa deuxième broche de sortie, et sa deuxième borne d'entrée est reliée à sa première broche de sortie.

En d'autres termes, l'inversion du branchement est réalisée dans le connecteur additionnel, qui est de préférence intégré au feu, tandis que l'embout ne comporte pas de telle inversion électrique. Cette réalisation n'impose pas de modification au niveau du faisceau (incluant l'embout).

Selon une autre réalisation, l'un des dispositifs de connexion est configuré de telle sorte que, dans l'embout, la première borne d'entrée est reliée à la deuxième broche de sortie, et la deuxième borne d'entrée est reliée à la première broche de sortie.

Dans cette autre réalisation, l'inversion du branchement est réalisée dans l'embout. On peut prévoir l'une ou l'autre des configurations suivantes :
- soit il est uniquement prévu un embout entre le faisceau et le feu : dans ce cas les broches de sortie de l'embout s'insèrent dans les bornes du connecteur du feu ;
- soit le dispositif de liaison comporte en outre un connecteur additionnel - qui dans ce cas ne comporte pas d'inversion du branchement. Dans ce cas, les broches de sortie de l'embout sont reliées de façon indirecte aux bornes du connecteur du feu. Plus précisément, les broches de sortie de l'embout s'insèrent dans les bornes en entrée du connecteur additionnel, et les broches en sortie du connecteur additionnel s'insèrent dans les bornes en entrée du connecteur du feu.

Selon un troisième aspect, l'invention concerne un véhicule, en particulier véhicule lourd tel qu'un camion tracteur ou porteur comprenant (i) à l'avant, une partie motrice comportant une cabine et (ii) à l'arrière, un conteneur destiné à recevoir des marchandises.

Ce véhicule peut comporter un feu arrière gauche et un feu arrière droit tels que précédemment décrits, ou un système de signalisation et d'éclairage de véhicule tel que précédemment décrit, le faisceau étant relié à un système de gestion du véhicule.

En pratique, le feu arrière est monté à l'arrière du conteneur, et le système de gestion peut être situé dans la partie motrice, le faisceau s'étendant ainsi de la partie motrice jusqu'à l'arrière du véhicule.

On décrit à présent, à titre d'exemples non limitatifs, plusieurs modes de réalisation possibles de l'invention, en référence aux figures annexées :
La figure 1 est une vue schématique en perspective, de dessous, d'un véhicule selon l'invention, comportant un feu arrière gauche et un feu arrière droit ;
La figure 2 est une vue schématique arrière du véhicule de la figure 1 ;
La figure 3 est une vue schématique d'un feu arrière selon l'invention, montrant sa face destinée à être fixée au véhicule ;
Les figures 4 et 5 illustrent de façon schématique deux modes de réalisation d'un système de signalisation et d'éclairage de véhicule selon l'invention, ledit système comprenant un feu arrière gauche et un feu arrière droit, ainsi qu'un ensemble de liaison pour raccorder un système de gestion du véhicule à chacun des feux.
La figure 6 est une représentation schématique de l'intérieur d'un feu arrière selon l'invention ;
La figure 7 est une vue de détail, schématique, de la figure 6.

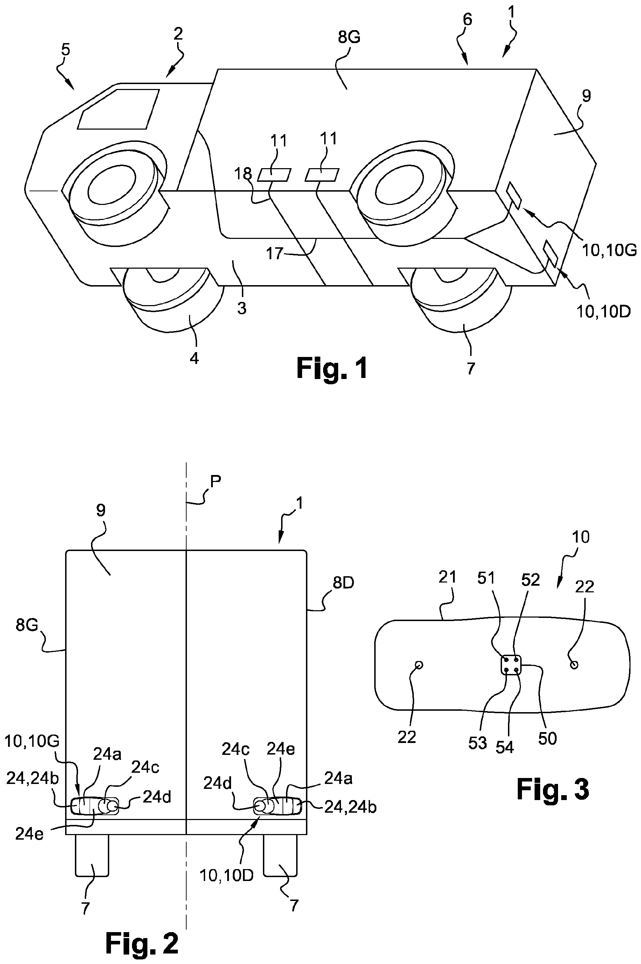

La figure 1 représente un véhicule 1 qui est ici un camion. Le véhicule 1 comprend, à l'avant, une partie motrice 2 pourvue d'un châssis 3, de roues avant 4 et d'une cabine 5. A l'arrière, le véhicule 1 comprend un conteneur 6 destiné à recevoir des marchandises, pourvu de roues arrière 7. Dans la réalisation représentée, le camion est un porteur, c'est-à-dire qu'il possède sur un seul et même châssis 3 la cabine 5 et le conteneur 6.

L'invention trouve néanmoins son application avec d'autres types de véhicules, et notamment de véhicules lourds. En particulier, l'invention s'applique également aux véhicules tracteurs, c'est-à-dire comprenant d'une part une partie motrice comportant la cabine et un châssis, et d'autre part un conteneur sous la forme d'une semi-remorque qui est chargée des marchandises et qui est attelée à la partie motrice. Dans ce cas, la semi-remorque est mécaniquement accrochée au châssis de la partie motrice, typiquement de façon articulée, et électriquement reliée à la partie motrice.

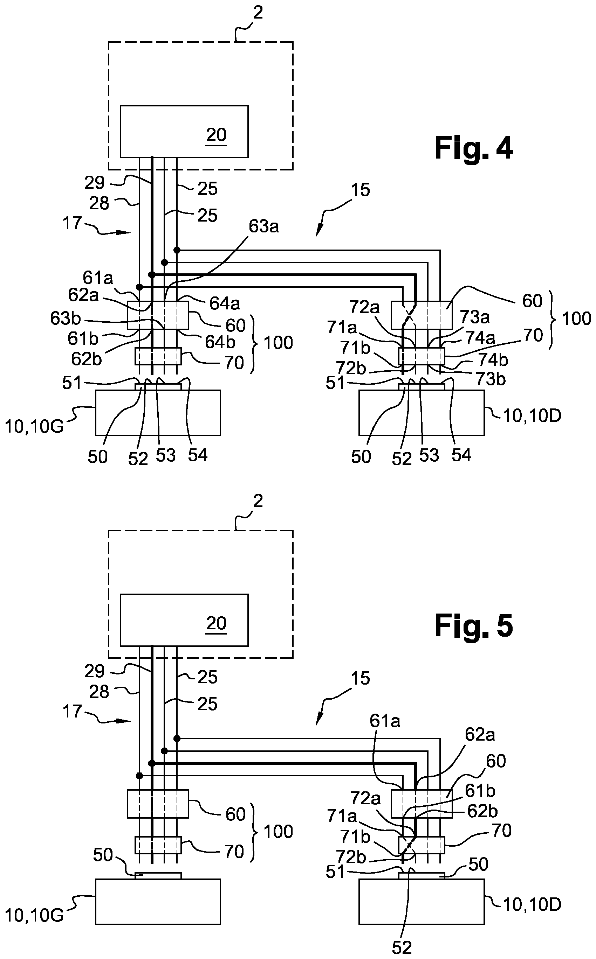

Le véhicule 1 comprend de plus un système de gestion 20 qui permet de gérer de façon globale le fonctionnement de divers dispositifs du véhicule 1. Ce système de gestion 20, illustré sur les figures 4 et 5, est généralement situé dans la partie motrice 2.

Une liaison électrique est prévue entre la partie motrice 2 et le conteneur 6, pour acheminer vers différents organes de signalisation du véhicule 1 les signaux de courant appropriés qui proviennent de la partie motrice 2. Ces signaux de courant peuvent servir à la fois à l'alimentation, à la commande et à la surveillance des différents organes de signalisation.

Les fonctions de signalisation réglementaires sur un conteneur de véhicule lourd peuvent comprendre : des feux arrière 10, des feux de position latéraux 11, ainsi que d'autres organes non représentés, comme : des feux d'encombrement avant, des feux d'encombrement arrière, une source lumineuse d'éclairage de la plaque d'immatriculation, etc.

De façon concrète, cette liaison électrique est réalisée au moyen d'un ensemble de liaison 15 qui permet de raccorder le système de gestion 20 du véhicule 1 à chacun des feux.

L'ensemble de liaison 15 comporte un faisceau 17 de câbles qui inclut un câble d'alimentation positive 28, un câble de masse 29, et au moins un câble 25 d'un support de communication multiplexé. La description qui suit est faite dans le cas d'un support de communication multiplexé de type bus CAN, qui comporte deux câbles 25 torsadés. Toutefois, l'invention s'applique également au cas d'un support de communication multiplexé de type bus Lin, qui utilise un seul câble 25.

Comme illustré sur la figure 1, le faisceau 17, qui peut être installé sous le plancher du conteneur 6, est relié, à l'avant, à la partie motrice 2 - et plus précisément au système de gestion 20 - et, à l'arrière, aux différentes fonctions de signalisation du véhicule 1 via d'éventuels câbles additionnels 18. Le faisceau 17 comporte généralement une gaine protectrice entourant les câbles, celle-ci n'étant pas représentée sur les figures.

L'ensemble de liaison 15 comporte de plus un dispositif de connexion 100 entre le faisceau 17 et chacun des feux arrière 10.

Dans le cas d'un véhicule tracteur (non représenté), la liaison électrique entre la partie motrice et la semi-remorque peut comprendre une ou plusieurs prises fixées sur la partie arrière de la partie motrice, et une ou plusieurs prises fixées sur la partie avant de la semi-remorque, ces prises étant reliées, par exemple au moyen d'un cordon extensible. Un faisceau de câbles, pouvant être installé sous le plancher de la semi-remorque, permet de relier les prises fixées sur la partie avant de la semi-remorque aux différentes fonctions de signalisation du véhicule via d'éventuels câbles additionnels.

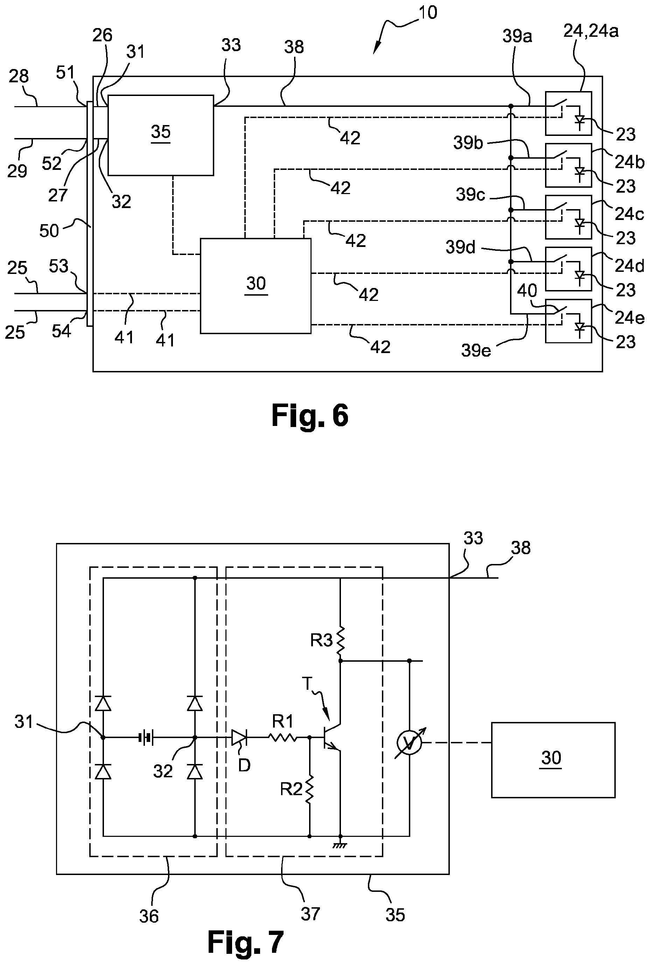

Comme illustré sur les figures 3 et 6, le feu arrière 10 comprend un boîtier 21, généralement en matière plastique, qui est fixé sur le véhicule 1 au moyen d'organes appropriés tels que des vis 22. Le feu arrière 10 comprend également une vitre (non représentée) assemblée au boîtier 21.

Dans le boîtier 21 sont disposées plusieurs sources lumineuses 23, pouvant typiquement être des LED (ou DEL, diode électroluminescente). Plus précisément, le boîtier 21 peut contenir plusieurs ensembles 24 de sources lumineuses 23, à savoir :
- un ensemble de LED formant un feu stop 24a ;
- un ensemble de LED formant un indicateur de direction 24b ;
- un ensemble de LED formant un feu de recul 24c ;
- un ensemble de LED formant un feu de brouillard 24d ;
- un ensemble de LED formant un feu de position 24e.

Le feu arrière 10 peut en outre comprendre un connecteur 50 monté sur le boîtier 21, pour permettre le raccordement au faisceau 17. Le connecteur 50 peut comporter, à l'extérieur du boîtier 21, un organe de liaison mécanique avec le faisceau 17. Le connecteur 50 possède une première borne d'alimentation 51 et une deuxième borne d'alimentation 52 destinées à être raccordées l'une au câble d'alimentation positive 28 du faisceau 17 et l'autre au câble de masse 29 du faisceau 17. Le connecteur 50 possède également deux bornes de communication 53, 54, destinées à être raccordées chacune à un câble 25 du support de communication multiplexé du faisceau 17 (dans le cas d'un bus CAN)

Le feu arrière 10 comprend de plus un circuit d'alimentation qui est logé dans le boîtier 21, et qui relie chacune des sources lumineuses 23 à la première et à la deuxième bornes d'alimentation 51, 52. Le circuit d'alimentation, plus particulièrement représenté sur la figure 6, comprend un premier conducteur 26 relié à la première borne d'alimentation 51 et un deuxième conducteur 27 relié à la deuxième borne d'alimentation 52.

Une unité de commande 30, logée dans le boîtier 21, est reliée aux bornes de communication 53, 54, et est de plus agencée pour pouvoir commander l'activation d'une ou de plusieurs sources lumineuses 23.

De façon concrète, l'unité de commande 30 et les sources lumineuses 23 peuvent être portées par une carte électronique logée dans le boîtier 21. La carte électronique (non représentée) peut se présenter sous la forme d'une plaque fixée sur le fond du boîtier 21 sensiblement parallèlement à celui-ci, au moyen d'organes de fixation tels que des vis. La carte électronique peut occuper sensiblement toute la section du boîtier 21. Elle peut servir de support pour les liaisons électriques entre les différents composants à l'intérieur du feu, ces liaisons électriques pouvant être réalisées sous forme de pistes.

On décrit à présent plus précisément le circuit d'alimentation, en référence aux figures 6 et 7. Sur ces figures, les traits pleins sont utilisés entre deux éléments qui sont reliés entre eux par une liaison physique (qu'il s'agisse d'un conducteur sous forme de câble, ou d'une piste) permettant en particulier l'alimentation électrique ; les pointillés sont utilisés entre deux éléments qui sont connectés entre eux, c'est-à-dire fonctionnellement associés, pas nécessairement par une liaison filaire, mais par une liaison permettant la transmission d'informations ou le pilotage (liaison infrarouge, hertzienne, etc.). Il est par ailleurs précisé que le terme « relié » n'implique pas nécessairement un lien direct entre deux éléments, une pièce intermédiaire pouvant être prévue entre ces deux éléments reliés.

Le circuit d'alimentation comporte un module 35 qui possède un premier noeud d'entrée 31 relié à la première borne d'alimentation 51, un deuxième noeud d'entrée 32 relié à la deuxième borne d'alimentation 52, et un noeud de sortie 33 relié aux sources lumineuses 23.

Comme illustré sur la figure 7, le module 35 comprend un dispositif redresseur 36, qui est configuré pour délivrer au noeud de sortie 33 une tension d'alimentation égale à la valeur absolue de la tension entre les première et deuxième bornes d'alimentation 51, 52. Dans la réalisation représentée à titre d'exemple, le dispositif redresseur 36 comprend un pont de diodes.

Le module 35 comprend de plus un dispositif de détection de polarité 37, qui est connecté à l'unité de commande 30. Le dispositif de détection de polarité 37 est configuré pour fournir à l'unité de commande 30 une donnée indiquant laquelle des première et deuxième bornes d'alimentation 51, 52 est raccordée au câble d'alimentation positive 28 du faisceau 17.

En pratique, le dispositif de détection de polarité 37 peut présenter la configuration suivante. Une diode D est montée en série avec une résistance R1 entre le deuxième noeud d'entrée 32 et la base d'un transistor T, l'émetteur du transistor T étant relié à la masse. Une résistance R2 relie la masse à un point situé entre la résistance R1 et la base du transistor T. Le collecteur du transistor T est relié au noeud de sortie 33, c'est-à-dire à une alimentation positive, via une résistance R3.

La donnée fournie par le dispositif de détection de polarité 37 est ici une tension V, prise entre la masse et un point situé entre la résistance R3 et le collecteur du transistor T.

La tension V prend une première valeur V1 si la première borne d'alimentation 51 - c'est-à-dire le premier noeud d'entrée 31 - est raccordée au câble d'alimentation positive 28, et prend une deuxième valeur V2 différente de la première valeur V1 si la deuxième borne d'alimentation 52 - c'est-à-dire le deuxième noeud d'entrée 32 - est raccordée au câble d'alimentation positive 28.

Avec le circuit décrit précédemment, la première valeur V1 est sensiblement égale à zéro, tandis que la deuxième valeur V2 est sensiblement égale à la valeur absolue de la tension entre les première et deuxième bornes d'alimentation 51, 52.

Le noeud de sortie 33 est relié à un conducteur commun 38 puis à chaque source lumineuse 23 - ou ensemble 24a-24e de sources lumineuses - via une branche 39a-39e dédiée. Chaque source lumineuse 23 - ou ensemble 24 de sources lumineuses formant une fonction de feu particulière - est montée entre le conducteur commun 38 et la masse 27.

L'unité de commande 30 est apte à piloter l'activation ou la désactivation des sources lumineuses 23. A cet effet, l'unité de commande 30 peut être connectée :
- d'une part aux bornes de communication 53, 54, via une première connexion 41, de sorte à recevoir une information de commande donnée par exemple par le conducteur, dans la cabine 5 ;
- et d'autre part à un interrupteur 40 agencé sur chacune des branches 39a-39e, via une deuxième liaison 42 dédiée à chacune des sources lumineuses 23.

Ainsi, chacune des sources lumineuses 23 est alimentée par le conducteur commun 38, mais l'interrupteur 40 correspondant est piloté par l'unité de commande 30 qui le place en position ouverte ou en position fermée selon qu'il existe ou non une tension sur le premier conducteur 26 correspondant, cette information étant reçue par l'unité de commande 30 via la première connexion 41. L'unité de commande 30 peut également être configurée pour mesurer l'état des sources lumineuses, c'est-à-dire pour détecter la défaillance d'une source lumineuse 23.

On décrit à présent le dispositif de connexion 100 entre le faisceau 17 et chacun des feux arrière 10, en référence aux figures 4 et 5.

Chacun des dispositifs de connexion 100 comprend un embout 60 qui est fixé sur le faisceau 17, et qui comporte :
- une première borne d'entrée 61a raccordée au câble d'alimentation positive 28 du faisceau 17 et une deuxième borne d'entrée 62a raccordée au câble de masse 29 du faisceau 17 ;
- deux bornes de communication en entrée 63a, 64a, raccordées chacune à l'un des câbles 25 du support de communication multiplexé du faisceau 17 ;
- une première broche de sortie 61b apte à être reliée à la première borne d'alimentation 51 du connecteur 50 du feu 10, et une deuxième broche de sortie 62b apte à être reliée à la deuxième borne d'alimentation 52 du connecteur 50 du feu 10 ;
- deux broches de communication en sortie 63b, 64b, aptes à être reliées aux bornes de communication 53, 54 du connecteur 50 du feu 10.

De façon optionnelle, chacun des dispositifs de connexion 100 peut de plus comprendre un connecteur additionnel 70, généralement fourni avec le feu arrière 10, par exemple déjà monté sur le feu arrière 10. C'est donc l'ensemble comprenant le feu arrière 10 et son connecteur additionnel 70 associé qui est monté sur le véhicule 1. Le connecteur additionnel 70 comporte :
- une première borne d'entrée 71a raccordée à la première broche de sortie 61b de l'embout 60, et une deuxième borne d'entrée 72a raccordée à la deuxième broche de sortie 62b de l'embout 60 ;
- deux bornes de communication en entrée 73a, 74a, raccordées chacune à une broche de communication en sortie 63b, 64b de l'embout 60 ;
- une première broche de sortie 71b destinée à coopérer avec la première borne d'alimentation 51 du connecteur 50 du feu 10, et une deuxième broche de sortie 72b destinée à coopérer avec la deuxième borne d'alimentation 52 du connecteur 50 du feu 10 ;
- deux broches de communication en sortie 73b, 74b.

Lorsque le connecteur additionnel 70 n'est pas présent, les broches de sortie 61b, 62b, 63b, 64b de l'embout 60 coopèrent directement avec les bornes 51-54 du connecteur 50 du feu 10.

Comme illustré sur la figure 2, le véhicule 1 comprend un feu arrière gauche 10G et un feu arrière droit 10D montés sur la face arrière 9 du conteneur 6.

Selon l'invention, le feu arrière gauche 10G et le feu arrière droit 10D sont identiques. Ils comportent les mêmes composants internes, la programmation de leurs unités de commande 30 est identique, et ils présentent la même géométrie.

Comme on le voit sur la figure 2, le feu arrière gauche 10G et le feu arrière droit 10D sont montés de façon symétrique par rapport au plan longitudinal médian P du véhicule 1. Ainsi, l'indicateur de direction 24b du feu arrière gauche 10G est situé à proximité de la face latérale 8G gauche du véhicule 1, tandis que l'indicateur de direction 24b du feu arrière droit 10D est situé à proximité de la face latérale 8D droite du véhicule 1.

Chacun des feux arrière 10 est relié au faisceau 17 ou à une dérivation de celui-ci, comme illustré sur les figures 4 et 5. Toutefois, le montage électrique du feu arrière gauche 10G et le montage électrique du feu arrière droit 10D sont inversés, comme cela va maintenant être expliqué. En effet, l'activation - ou non - de l'indicateur de direction 24b dépend du positionnement latéral du feu arrière 10 sur le véhicule 1.

Dans l'exemple représenté, le montage électrique du feu arrière gauche 10G s'effectue sans inversion, tandis que le montage électrique du feu arrière droit 10D s'effectue avec inversion, étant précisé que la configuration opposée est tout à fait possible.

De façon concrète, un montage sans inversion - ici, dans le feu arrière gauche 10G - signifie que la première borne d'alimentation 51 du connecteur 50 du feu 10 est reliée au câble d'alimentation positive 28 du faisceau 17, et que la deuxième borne d'alimentation 52 du connecteur 50 du feu 10 est reliée au câble de masse 29 du faisceau 17.

Plus précisément, dans l'embout 60, la première borne d'entrée 61a est reliée à la première broche de sortie 61b, et la deuxième borne d'entrée 62a est reliée à la deuxième broche de sortie 62b. En outre, si le connecteur additionnel 70 est présent, dans ce connecteur additionnel 70, la première borne d'entrée 71a est reliée à la première broche de sortie 71b, et la deuxième borne d'entrée 72a est reliée à la deuxième broche de sortie 72b.

Le feu arrière gauche 10G fonctionne ainsi de la façon habituelle, le dispositif redresseur 36 n'étant pas utile. L'unité de commande 30, connectée au dispositif de détection de polarité 37, reçoit une donnée V = V1, et détermine ainsi qu'il s'agit d'un feu arrière gauche 10G. En conséquence, lorsque l'unité de commande 30 recevra via le support de communication multiplexé une commande d'activation de l'indicateur de direction 24b du feu arrière gauche 10G, elle commandera la fermeture de l'interrupteur 40 correspondant. En revanche, lorsque l'unité de commande 30 recevra via le support de communication multiplexé une commande d'activation de l'indicateur de direction 24b du feu arrière droit 10D, elle ne commandera pas la fermeture de l'interrupteur 40 correspondant.

Le montage avec inversion - ici dans le feu arrière droit 10D - signifie que la première borne d'alimentation 51 du connecteur 50 du feu 10 est reliée au câble de masse 29 du faisceau 17, et que la deuxième borne d'alimentation 52 du connecteur 50 du feu 10 est reliée au câble d'alimentation positive 28 du faisceau 17.

L'inversion peut être réalisée dans l'embout 60, selon le mode de réalisation représenté sur la figure 4. Ainsi, dans l'embout 60, la première borne d'entrée 61a est reliée à la deuxième broche de sortie 62b, et la deuxième borne d'entrée 62a est reliée à la première broche de sortie 61b. Avec cette configuration, si un connecteur additionnel 70 est présent, il n'y a pas d'inversion de connexion électrique dans ce connecteur additionnel 70. En d'autres termes, dans le connecteur additionnel 70, la première borne d'entrée 71a est reliée à la première broche de sortie 71b, et la deuxième borne d'entrée 72a est reliée à la deuxième broche de sortie 72b.

En variante, lorsqu'un connecteur additionnel 70 est présent, l'inversion peut être réalisée dans ce connecteur additionnel 70, selon le mode de réalisation représenté sur la figure 5. Ainsi, dans le connecteur additionnel 70, la première borne d'entrée 71a est reliée à la deuxième broche de sortie 72b, et la deuxième borne d'entrée 72a est reliée à la première broche de sortie 71b. Avec cette configuration, il n'y a pas d'inversion de connexion électrique dans l'embout 60.

Le feu arrière droit 10D est donc relié au faisceau 17 de façon inversée par rapport au feu arrière gauche 10G.

Ceci n'induit pas de problème de fonctionnement, bien que les feux arrière gauche et droit 10 soient identiques d'un point de vue structurel et d'un point de vue logiciel. En effet, grâce au dispositif redresseur 36, les sources lumineuses 23 sont alimentées par une tension positive malgré l'inversion de raccordement au câble d'alimentation positive 28 et au câble de masse 29 au niveau des bornes d'alimentation 51, 52 du connecteur 50 du feu arrière droit 10D.

Par ailleurs, l'unité de commande 30, connectée au dispositif de détection de polarité 37, reçoit une donnée V = V2, et détermine ainsi qu'il s'agit d'un feu arrière droit 10D. En conséquence, lorsque l'unité de commande 30 recevra via le support de communication multiplexé une commande d'activation de l'indicateur de direction 24b du feu arrière droit 10D, elle commandera la fermeture de l'interrupteur 40 correspondant. En revanche, lorsque l'unité de commande 30 recevra via le support de communication multiplexé une commande d'activation de l'indicateur de direction 24b du feu arrière gauche 10G, elle ne commandera pas la fermeture de l'interrupteur 40 correspondant.

Ainsi, l'invention apporte une amélioration déterminante à la technique antérieure, en fournissant un feu arrière de véhicule qui peut indifféremment être positionné à gauche ou à droite d'un véhicule, sans nuire au fonctionnement requis de ce feu.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons. Notamment, bien que l'invention ait été décrite en référence à un indicateur de direction, elle trouve également son application à des feux incluant un flasheur.

## Revendications

1. Feu arrière de véhicule (1), comprenant :
- un boîtier (21) ;
- une pluralité de sources lumineuses (23) disposées dans le boîtier (21), parmi lesquelles au moins une source lumineuse (23, 24b) dont l'activation dépend du positionnement latéral du feu sur le véhicule (1) ;
- un connecteur (50) monté sur le boîtier (21), pour permettre le raccordement à un faisceau (17) de câbles du véhicule (1), le connecteur (50) possédant :
- une première borne d'alimentation (51) et une deuxième borne d'alimentation (52) destinées à être raccordées l'une à un câble d'alimentation positive (28) du faisceau (17) et l'autre à un câble de masse (29) du faisceau (17) ;
- au moins une borne de communication (53, 54), destinée à être raccordée à un câble (25) d'un support de communication multiplexé du faisceau (17), tel qu'un bus CAN ou un bus Lin ;
- un circuit d'alimentation logé dans le boîtier (21), reliant chacune des sources lumineuses (23) à la première et à la deuxième bornes d'alimentation (51, 52) ;
- une unité de commande (30) logée dans le boîtier (21), qui est reliée à la ou à chaque borne de communication (53, 54), et qui est agencée pour pouvoir commander l'activation d'une ou de plusieurs sources lumineuses (23) ;
**caractérisé en ce que** le circuit d'alimentation comporte un module (35) qui possède un premier noeud d'entrée (31) relié à la première borne d'alimentation (51), un deuxième noeud d'entrée (32) relié à la deuxième borne d'alimentation (52), et un noeud de sortie (33) relié aux sources lumineuses (33), le module (35) comportant :
- un dispositif redresseur (36), configuré pour délivrer au noeud de sortie (33) une tension d'alimentation égale à la valeur absolue de la tension entre les première et deuxième bornes d'alimentation (51, 52), en fonctionnement ;
- un dispositif de détection de polarité (37), connecté à l'unité de commande (30), et configuré pour fournir à cette dernière une donnée (V) indiquant laquelle des première et deuxième bornes d'alimentation (51, 52) est raccordée à un câble d'alimentation positive (28), en fonctionnement.

2. Feu selon la revendication 1, **caractérisé en ce que** la source lumineuse (23) dont l'activation dépend du positionnement latéral du feu sur le véhicule (1) appartient au groupe comprenant : un indicateur de direction, un flasheur.

3. Feu selon la revendication 1 ou 2, **caractérisé en ce que** le dispositif redresseur (36) comprend un pont de diodes.

4. Feu selon l'une des revendications 1 à 3, **caractérisé en ce que** la donnée fournie par le dispositif de détection de polarité (37) est une tension, ladite tension prenant une première valeur (V1) si la première borne d'alimentation (51) est raccordée à un câble d'alimentation positive (28), et prenant une deuxième valeur (V2) différente de la première valeur (V1) si la deuxième borne d'alimentation (52) est raccordée à un câble d'alimentation positive (28).

5. Feu selon la revendication 4, **caractérisé en ce que** la première valeur (V1) est sensiblement égale à zéro, et/ou **en ce que** la deuxième valeur (V2) est sensiblement égale à la valeur absolue de la tension entre les première et deuxième bornes d'alimentation (51, 52).

6. Feu selon l'une des revendications 1 à 5, **caractérisé en ce qu'**il comprend un connecteur additionnel (70) qui comporte :
- au moins trois bornes d'entrée, pour permettre le raccordement à un faisceau (17) du véhicule (1), à savoir :
- une première borne d'entrée (71a) destinée à être raccordée à un câble d'alimentation positive (28) du faisceau (17) et une deuxième borne d'entrée (72a) destinée à être raccordée à un câble de masse (29) du faisceau (17) ;
- au moins une borne de communication en entrée (73a, 74a), destinée à être raccordée à un câble (25) d'un support de communication multiplexé du faisceau (17) ;
- au moins trois broches de sortie, pour permettre le raccordement aux bornes du connecteur (50) monté sur le boîtier (21), à savoir :
- une première broche de sortie (71b) destinée à coopérer avec la première borne d'alimentation (51) du connecteur (50), et une deuxième broche de sortie (72b) destinée à coopérer avec la deuxième borne d'alimentation (52) du connecteur (50) ;
- au moins une broche de communication en sortie (73b, 74b) ;
le connecteur additionnel (70) étant conformé de telle sorte que la première borne d'entrée (71a) est reliée à la deuxième broche de sortie (72b), et la deuxième borne d'entrée (72a) est reliée à la première broche de sortie (71a).

7. Système de signalisation et d'éclairage de véhicule (1), comprenant :
- un feu arrière gauche (10, 10G) et un feu arrière droit (10, 10D), les feux (10) étant conformes à l'une quelconque des revendications précédentes ;
- un ensemble de liaison pour raccorder un système de gestion (20) du véhicule (1) à chacun des feux (10), ledit ensemble de liaison comportant :
- un faisceau (17) de câbles qui inclut un câble d'alimentation positive (28), un câble de masse (29), et au moins un câble (25) d'un support de communication multiplexé, tel qu'un bus CAN ou un bus Lin, le faisceau (17) de câbles étant destiné à être relié à un système de gestion (20) du véhicule (1) ;
- un dispositif de connexion (100) entre le faisceau (17) et chacun des feux (10), chaque dispositif de connexion (100) comportant au moins trois broches (61b-64b ; 71b-74b) qui sont reliées chacune à un câble (28, 29, 25) du faisceau (17) et qui sont aptes à être reliées aux bornes (51-54) du connecteur (50) du feu (10) ;
**caractérisé en ce que** le feu arrière gauche (10G) et le feu arrière droit (10D) sont identiques, **en ce que** le dispositif de connexion (100) de l'un (10G, 10D) des feux est configuré de sorte que la première borne d'alimentation (51) du connecteur (50) de ce feu soit reliée au câble d'alimentation positive (28) du faisceau (17), et **en ce que** le dispositif de connexion (100) de l'autre (10D, 10G) des feux est configuré de sorte que la première borne d'alimentation (51) du connecteur (50) de ce feu soit reliée au câble de masse (29) du faisceau (17).

8. Système selon la revendication 7, **caractérisé en ce que** chacun des dispositifs de connexion (100) comprend un embout (60) qui est fixé sur le faisceau (17), et qui comporte :
- une première borne d'entrée (61a) raccordée au câble d'alimentation positive (28) du faisceau (17) et une deuxième borne d'entrée (62a) raccordée au câble de masse (29) du faisceau (17) ;
- au moins une borne de communication en entrée (63a, 63b), raccordée au câble ou à l'un des câbles (25) du support de communication multiplexé du faisceau (17) ;
- une première broche de sortie (61b) apte à être reliée à la première borne d'alimentation (51) du connecteur (50) du feu, et une deuxième broche de sortie (62b) apte à être reliée à la deuxième borne d'alimentation (52) du connecteur (50) du feu (10) ;
- au moins une broche de communication en sortie (63b, 64b), apte à être reliée à la borne de communication (53, 54) du connecteur (50) du feu (10).

9. Système selon la revendication 8, **caractérisé en ce que** l'un des dispositifs de connexion (100) :
- est configuré de telle sorte que, dans l'embout (60), la première borne d'entrée (61a) est reliée à la première broche de sortie (61b), et la deuxième borne d'entrée (62a) est reliée à la deuxième broche de sortie (62b) ;
- et comprend de plus un connecteur additionnel (70) qui comporte :
- une première borne d'entrée (71a) raccordée à la première broche de sortie (61b) de l'embout (60), et une deuxième borne d'entrée (72a) raccordée à la deuxième broche de sortie (62b) de l'embout (60) ;
- au moins une borne de communication en entrée (73a, 74a), raccordée à une broche de communication en sortie (63b, 64b) de l'embout (60) ;
- une première broche de sortie (71b) destinée à coopérer avec la première borne d'alimentation (51) du connecteur (50) du feu, et une deuxième broche de sortie (72b) destinée à coopérer avec la deuxième borne d'alimentation (52) du connecteur (50) du feu ;
- au moins une broche de communication en sortie (73b, 74b) ;
le connecteur additionnel (70) étant conformé de telle sorte que sa première borne d'entrée (71a) est reliée à sa deuxième broche de sortie (72b), et sa deuxième borne d'entrée (72a) est reliée à sa première broche de sortie (71b).

10. Système selon la revendication 8, **caractérisé en ce que** l'un des dispositifs de connexion (100) est configuré de telle sorte que, dans l'embout (60), la première borne d'entrée (61a) est reliée à la deuxième broche de sortie (62b), et la deuxième borne d'entrée (62a) est reliée à la première broche de sortie (61b).

11. Véhicule, en particulier véhicule lourd tel qu'un camion tracteur ou porteur comprenant (i) à l'avant, une partie motrice (2) comportant une cabine (5) et (ii) à l'arrière, un conteneur (6) destiné à recevoir des marchandises, **caractérisé en ce qu'**il comprend un feu arrière gauche (10, 10G) et un feu arrière droit (10, 10D) selon l'une des revendications 1 à 6, montés sur la face arrière (9) du conteneur (6).

12. Véhicule, en particulier véhicule lourd tel qu'un camion tracteur ou porteur comprenant (i) à l'avant, une partie motrice (2) comportant une cabine (5) et (ii) à l'arrière, un conteneur (6) destiné à recevoir des marchandises, **caractérisé en ce qu'**il comprend un système de signalisation et d'éclairage de véhicule selon l'une des revendications 7 à 11, le faisceau (17) étant relié à un système de gestion (20) du véhicule (1).

## Patentansprüche

1. Rückleuchte eines Fahrzeugs (1), umfassend:
- ein Gehäuse (21);
- eine Vielzahl von Lichtquellen (23), die in dem Gehäuse (21) angeordnet sind, worunter mindestens eine Lichtquelle (23, 24b) ist, deren Aktivierung von der seitlichen Positionierung der Leuchte auf dem Fahrzeug (1) abhängt;
- einen Stecker (50), der auf dem Gehäuse (21) angebracht ist, um den Anschluss an ein Kabelbündel (17) des Fahrzeugs (1) zu ermöglichen, wobei der Stecker (50) besitzt:
-- eine erste Versorgungsklemme (51) und eine zweite Versorgungsklemme (52), die dazu bestimmt sind, jeweils an ein positives Versorgungskabel (28) des Bündels (17) und an ein Massekabel (29) des Bündels (17) angeschlossen zu werden;
-- mindestens eine Kommunikationsklemme (53, 54), die dazu bestimmt ist, an ein Kabel (25) eines gemultiplexten Kommunikationsmediums des Bündels (17), wie etwa eines CAN-Bus oder eines LIN-Bus, angeschlossen zu werden;
- einen Versorgungskreis, der in dem Gehäuse (21) untergebracht ist und jede der Lichtquellen (23) mit der ersten und der zweiten Versorgungsklemme (51, 52) verbindet;
- eine Steuerungseinheit (30), die in dem Gehäuse (21) untergebracht ist und mit der oder mit jeder Kommunikationsklemme (53, 54) verbunden ist, und die eingerichtet ist, um die Aktivierung einer oder mehrerer Lichtquellen (23) steuern zu können;
**dadurch gekennzeichnet, dass** der Versorgungskreis ein Modul (35) aufweist, das einen ersten Eingangsknoten (31), der mit der ersten Versorgungsklemme (51) verbunden ist, einen zweiten Eingangsknoten (32), der mit der zweiten Versorgungsklemme (52) verbunden ist, und einen Ausgangsknoten (33), der mit den Lichtquellen (33) verbunden ist, besitzt, wobei das Modul (35) aufweist:
- eine Gleichrichtervorrichtung (36), die konfiguriert ist, in Betrieb an den Ausgangsknoten (33) eine Versorgungsspannung zu liefern, die gleich hoch ist wie der absolute Wert der Spannung zwischen der ersten und zweiten Versorgungsklemme (51, 52);
- eine Vorrichtung zur Polaritätserkennung (37), die an die Steuerungseinheit (30) angeschlossen und konfiguriert ist, dieser Letzteren in Betrieb eine Information (V) bereitzustellen, die angibt, welche der ersten und zweiten Versorgungsklemme (51, 52) an ein positives Versorgungskabel (28) angeschlossen ist.

2. Leuchte nach Anspruch 1, **dadurch gekennzeichnet, dass** die Lichtquelle (23), deren Aktivierung von der seitlichen Positionierung der Leuchte auf dem Fahrzeug (1) abhängt, zu der Gruppe gehört, umfassend: einen Richtungsanzeiger, einen Blinker.

3. Leuchte nach Anspruch 1 oder 2, **dadurch gekennzeichnet, dass** die Gleichrichtervorrichtung (36) eine Diodenbrücke umfasst.

4. Leuchte nach einem der Ansprüche 1 bis 3, **dadurch gekennzeichnet, dass** die von der Vorrichtung zur Polaritätserkennung (37) bereitgestellte Information eine Spannung ist, wobei die Spannung einen ersten Wert (V1) annimmt, wenn die erste Versorgungsklemme (51) an ein positives Versorgungskabel (28) angeschlossen wird, und einen zweiten Wert (V2) annimmt, der sich von dem ersten Wert (V1) unterscheidet, wenn die zweite Versorgungsklemme (52) an ein positives Versorgungskabel (28) angeschlossen wird.

5. Leuchte nach Anspruch 4, **dadurch gekennzeichnet, dass** der erste Wert (V1) im Wesentlichen gleich null ist, und/oder dadurch, dass der zweite Wert (V2) im Wesentlichen gleich hoch ist wie der absolute Wert der Spannung zwischen der ersten und zweiten Versorgungsklemme (51, 52).

6. Leuchte nach einem der Ansprüche 1 bis 5, **dadurch gekennzeichnet, dass** sie einen zusätzlichen Stecker (70) umfasst, der aufweist:
- mindestens drei Eingangsklemmen, um den Anschluss an ein Bündel (17) des Fahrzeugs (1) zu ermöglichen, welche sind:
-- eine erste Eingangsklemme (71a), die dazu bestimmt ist, an ein positives Versorgungskabel (28) des Bündels (17) angeschlossen zu werden, und eine zweite Eingangsklemme (72a), die dazu bestimmt ist, an ein Massekabel (29) des Bündels (17) angeschlossen zu werden;
-- mindestens eine Eingangskommunikationsklemme (73a, 74a), die dazu bestimmt ist, an ein Kabel (25) eines gemultiplexten Kommunikationsmediums des Bündels (17) angeschlossen zu werden;
- mindestens drei Ausgangspins, um den Anschluss an die Klemmen des Steckers (50), der auf dem Gehäuse (21) angebracht ist, zu ermöglichen, welche sind:
-- ein erster Ausgangspin (71b), der dazu bestimmt ist, mit der ersten Versorgungsklemme (51) des Steckers (50) zusammenzuwirken, und ein zweiter Ausgangspin (72b), der dazu bestimmt ist, mit der zweiten Versorgungsklemme (52) des Steckers (50) zusammenzuwirken;
-- mindestens ein Ausgangskommunikationspin (73b, 74b);
wobei der zusätzliche Stecker (70) so ausgeführt ist, dass die erste Eingangsklemme (71a) mit dem zweiten Ausgangspin (72b) verbunden ist, und die zweite Eingangsklemme (72a) mit dem ersten Ausgangspin (71a) verbunden ist.

7. Signalisierungs- und Beleuchtungssystem eines Fahrzeugs (1), umfassend:
- eine linke Rückleuchte (10, 10G) und eine rechte Rückleuchte (10, 10D), wobei die Leuchten (10) nach einem der vorstehenden Ansprüche ausgeführt sind;
- eine Verbindungsbaugruppe, um ein Verwaltungssystem (20) des Fahrzeugs (1) an jede der Leuchten (10) anzuschließen, wobei die Verbindungsbaugruppe aufweist:
--ein Kabelbündel (17), das ein positives Versorgungskabel (28), ein Massekabel (29) und mindestens ein Kabel (25) eines gemultiplexten Kommunikationsmediums, wie etwa eines CAN-Bus oder eines LIN-Bus, einschließt, wobei das Kabelbündel (17) dazu bestimmt ist, mit einem Verwaltungssystem (20) des Fahrzeugs (1) verbunden zu werden;
--eine Verbindungsvorrichtung (100) zwischen dem Bündel (17) und jeder der Leuchten (10), wobei jede Verbindungsvorrichtung (100) mindestens drei Pins (61b - 64b; 71b - 74b) aufweist, die jeweils mit einem Kabel (28, 29, 25) des Bündels (17) verbunden sind und die fähig sind, mit den Klemmen (51 - 54) des Steckers (50) der Leuchte (10) verbunden zu werden;
**dadurch gekennzeichnet, dass** die linke Rückleuchte (10G) und die rechte Rückleuchte (10D) identisch sind, und dadurch, dass die Verbindungsvorrichtung (100) einer (10G, 10D) der Leuchten so konfiguriert ist, dass die erste Versorgungsklemme (51) des Steckers (50) dieser Leuchte mit dem positiven Versorgungskabel (28) des Bündels (17) verbunden ist, und dadurch, dass die Verbindungsvorrichtung (100) der anderen (10D, 10G) der Leuchten so konfiguriert ist, dass die erste Versorgungsklemme (51) des Steckers (50) dieser Leuchte mit dem Massekabel (29) des Bündels (17) verbunden ist.

8. System nach Anspruch 7, **dadurch gekennzeichnet, dass** jede der Verbindungsvorrichtungen (100) ein Endstück (60) umfasst, das auf dem Bündel (17) befestigt ist und das aufweist:
- eine erste Eingangsklemme (61a), die an das positive Versorgungskabel (28) des Bündels (17) angeschlossen ist, und eine zweite Eingangsklemme (62a), die an das Massekabel (29) des Bündels (17) angeschlossen ist;
- mindestens eine Eingangskommunikationsklemme (63a, 63b), die an das Kabel oder an eines der Kabel (25) des gemultiplexten Kommunikationsmediums des Bündels (17) angeschlossen ist;
- einen ersten Ausgangspin (61b), der fähig ist, mit der ersten Versorgungsklemme (51) des Steckers (50) der Leuchte verbunden zu werden, und einen zweiten Ausgangspin (62b), der fähig ist, mit der zweiten Versorgungsklemme (52) des Steckers (50) der Leuchte (10) verbunden zu werden;
- mindestens einen Ausgangskommunikationspin (63b, 64b), der fähig ist, mit der Kommunikationsklemme (53, 54) des Steckers (50) der Leuchte (10) verbunden zu werden.

9. System nach Anspruch 8, **dadurch gekennzeichnet, dass** eine der Verbindungsvorrichtungen (100):
- so konfiguriert ist, dass, in dem Endstück (60), die erste Eingangsklemme (61a) mit dem ersten Ausgangspin (61b) verbunden ist und die zweite Eingangsklemme (62a) mit dem zweiten Ausgangspin (62b) verbunden ist;
- und außerdem einen zusätzlichen Stecker (70) umfasst, der aufweist:
-- eine erste Eingangsklemme (71a), die an den ersten Ausgangspin (61b) des Endstücks (60) angeschlossen ist, und eine zweite Eingangsklemme (72a), die an den zweiten Ausgangspin (62b) des Endstücks (60) angeschlossen ist;
-- mindestens eine Eingangskommunikationsklemme (73a, 74a), die an einen Ausgangskommunikationspin (63b, 64b) des Endstücks (60) angeschlossen ist;
-- einen ersten Ausgangspin (71b), der dazu bestimmt ist, mit der ersten Versorgungsklemme (51) des Steckers (50) der Leuchte zusammenzuwirken, und einen zweiten Ausgangspin (72b), der dazu bestimmt ist, mit der zweiten Versorgungsklemme (52) des Steckers (50) der Leuchte zusammenzuwirken;
-- mindestens einen Ausgangskommunikationspin (73b, 74b);
wobei der zusätzliche Stecker (70) so ausgeführt ist, dass seine erste Eingangsklemme (71a) mit seinem zweiten Ausgangspin (72b) verbunden ist, und seine zweite Eingangsklemme (72a) mit seinem ersten Ausgangspin (71b) verbunden ist.

10. System nach Anspruch 8, **dadurch gekennzeichnet, dass** eine der Verbindungsvorrichtungen (100) so konfiguriert ist, dass, in dem Endstück (60), die erste Eingangsklemme (61a) mit dem zweiten Ausgangspin (62b) verbunden ist und die zweite Eingangsklemme (62a) mit dem ersten Ausgangspin (61b) verbunden ist.

11. Fahrzeug, insbesondere ein Lastfahrzeug wie etwa ein Lastkraftwagen oder ein Sattelzug, umfassend (i) vorne einen Antriebsteil (2), der eine Kabine (5) aufweist, und (ii) hinten einen Anhänger (6), der dazu bestimmt ist, Waren aufzunehmen, **dadurch gekennzeichnet, dass** es eine linke Rückleuchte (10, 10G) und eine rechte Rückleuchte (10, 10D) nach einem der Ansprüche 1 bis 6 umfasst, die auf der Rückseite (9) des Anhängers (6) angebracht sind.

12. Fahrzeug, insbesondere ein Lastfahrzeug wie etwa ein Lastkraftwagen oder ein Sattelzug, umfassend (i) vorne einen Antriebsteil (2), der eine Kabine (5) aufweist, und (ii) hinten einen Anhänger (6), der dazu bestimmt ist, Waren aufzunehmen, **dadurch gekennzeichnet, dass** es ein Signalisierungs- und Beleuchtungssystem eines Fahrzeugs nach einem der Ansprüche 7 bis 11 umfasst, wobei das Bündel (17) mit einem Verwaltungssystem (20) des Fahrzeugs (1) verbunden ist.

## Claims

1. A vehicle rear lamp (1), comprising:
- a casing (21);
- a plurality of light sources (23) disposed in the casing (21), among which at least one light source (23, 24b) the activation of which depends on the lateral positioning of the lamp on the vehicle (1);
- a connector (50) mounted on the casing (21) to enable the connection to a bundle (17) of cables of the vehicle (1), the connector (50) having:
- a first power supply terminal (51) and a second power supply terminal (52) intended to be connected, the one to a positive power supply cable (28) of the bundle (17) and the other to a ground cable (29) of the bundle (17);
- at least one communication terminal (53, 54) intended to be connected to a cable (25) of a multiplexed communication medium of the bundle (17), such as a CAN bus or a Lin bus;
- a power supply circuit housed in the casing (21) linking each of the light sources (23) to the first and second power supply terminals (51, 52);
- a control unit (30) housed in the casing (21), which is linked to the or each communication terminal (53, 54), and which is arranged to be able to control the activation of one or more light source(s) (23);
**characterized in that** the power supply circuit includes a module (35) which has a first input node (31) linked to the first power supply terminal (51), a second input node (32) linked to the second power supply terminal (52), and an output node (33) linked to the light sources (33), the module (35) including:
- a rectifier device (36) configured to deliver to the output node (33) a power supply voltage equal to the absolute value of the voltage between the first and second power supply terminals (51, 52) in operation;
- a polarity detection device (37) connected to the control unit (30) and configured to provide the latter with a data (V) indicating which of the first and second power supply terminals (51, 52) is connected to a positive power supply cable (28) in operation.

2. The vehicle rear lamp according to claim 1, **characterized in that** the light source (23) whose activation depends on the lateral positioning of the lamp on the vehicle (1) belongs to the group comprising: a direction indicator lamp, a flasher.

3. The vehicle rear lamp according to claim 1 or 2, **characterized in that** the rectifier device (36) comprises a diode bridge.

4. The vehicle rear lamp according to any of claims 1 to 3, **characterized in that** the data given by the polarity detection device (37) is a voltage, said voltage taking a first value (V1) if the first power supply terminal (51) is connected to a positive power supply cable (28), and taking a second value (V2) different from the first value (V1) if the second power supply terminal (52) is connected to a positive power supply cable (28).

5. The vehicle rear lamp according to claim 4, **characterized in that** the first value (V1) is substantially equal to zero, and/or **in that** the second value (V2) is substantially equal to the absolute value of the voltage between the first and second power supply terminals (51, 52).

6. The vehicle rear lamp according to any of claims 1 to 5, **characterized in that** it comprises an additional connector (70) which includes:
- at least three input terminals to allow the connection to a bundle (17) of the vehicle (1), namely:
- a first input terminal (71a) intended to be connected to a positive power supply cable (28) of the bundle (17) and a second input terminal (72a) intended to be connected to a ground cable (29) of the bundle (17);
- at least one input communication terminal (73a, 74a) intended to be connected to a cable (25) of a multiplexed communication medium of the bundle (17);
- at least three output pins to allow the connection to the terminals of the connector (50) mounted on the casing (21), namely:
- a first output pin (71b) intended to cooperate with the first power supply terminal (51) of the connector (50) and a second output pin (72b) intended to cooperate with the second power supply terminal (52) of the connector (50);
- at least one output communication pin (73b, 74b);
the additional connector (70) being shaped such that the first input terminal (71a) is linked to the second output pin (72b), and the second input terminal (72a) is linked to the first output pin (71a).

7. A vehicle signaling and lighting system (1), comprising:
- a left rear lamp (10, 10G) and a right rear lamp (10, 10D), the lamps (10) being in accordance with any one of the preceding claims;
- a linkage assembly to connect a management system (20) of the vehicle (1) to each of the lamps (10), said linkage assembly including:
- a bundle (17) of cables that includes a positive power supply cable (28), a ground cable (29), and at least one cable (25) of a multiplexed communication medium, such as a CAN bus or a Lin bus, the bundle (17) of cables being intended to be linked to a management system (20) of the vehicle (1);
- a connection device (100) between the bundle (17) and each of the lamps (10), each connection device (100) including at least three pins (61b-64b; 71b-74b) which are linked each to a cable (28, 29, 25) of the bundle (17) and which are adapted to be linked to the terminals (51-54) of the connector (50) of the lamp (10);
**characterized in that** the left rear lamp (10G) and the right rear lamp (10D) are identical, **in that** the connection device (100) of one (10G, 10D) of the lamps is configured so that the first power supply terminal (51) of the connector (50) of this lamp is linked to the positive power supply cable (28) of the bundle (17), and **in that** the connection device (100) of the other (10D, 10G) of the lamps is configured so that the first power supply terminal (51) of the connector (50) of this lamp is linked to the ground cable (29) of the bundle (17).

8. The vehicle signaling and lighting system according to claim 7, **characterized in that** each of the connection devices (100) comprises an end-piece (60) which is fixed onto the bundle (17), and which includes:
- a first input terminal (61a) connected to the positive power supply cable (28) of the bundle (17) and a second input terminal (62a) connected to the ground cable (29) of the bundle (17);
- at least one input communication terminal (63a, 63b) connected to the cable or to one of the cables (25) of the multiplexed communication medium of the bundle (17);
- a first output pin (61b) adapted to be linked to the first power supply terminal (51) of the connector (50) of the lamp, and a second output pin (62b) adapted to be linked to the second power supply terminal (52) of the connector (50) of the lamp (10);
- at least one output communication pin (63b, 64b) adapted to be linked to the communication terminal (53, 54) of the connector (50) of the lamp (10).

9. The vehicle signaling and lighting system according to claim 8, **characterized in that** one of the connection devices (100):
- is configured such that, in the end-piece (60), the first input terminal (61a) is linked to the first output pin (61b), and the second input terminal (62a) is linked to the second output pin (62b);
- and further comprises an additional connector (70) which includes:
- a first input terminal (71a) connected to the first output pin (61b) of the end-piece (60), and a second input terminal (72a) linked to the second output pin (62b) of the end-piece (60);
- at least one input communication terminal (73a, 74a) connected to an output communication pin (63b, 64b) of the end-piece (60);
- a first output pin (71b) intended to cooperate with the first power supply terminal (51) of the fire connector (50) of the lamp, and a second output pin (72b) intended to cooperate with the second power supply terminal (52) of the fire connector (50) of the lamp;
- at least one output communication pin (73b, 74b);
the additional connector (70) being shaped so that its first input terminal (71a) is linked to its second output pin (72b), and its second input terminal (72a) is linked to its first output pin (71b).

10. The vehicle signaling and lighting system according to claim 8, **characterized in that** one of the connection devices (100) is configured such that, in the end-piece (60), the first input terminal (61a) is linked to the second output pin (62b), and the second input terminal (62a) is linked to the first output pin (61b).

11. A vehicle, particularly a heavy-duty vehicle such as a tractor or straight truck comprising (i) at the front, a driving part (2) including a cabin (5) and (ii) at the rear, a container (6) intended to receive goods, **characterized in that** it comprises a left rear lamp (10, 10G) and a right rear lamp (10, 10D) according to any of claims 1 to 6, mounted on the rear face (9) of the container (6).

12. The vehicle, particularly the heavy-duty vehicle such as a tractor or straight truck comprising (i) at the front, a driving part (2) including a cabin (5) and (ii) at the rear, a container (6) intended to receive goods, **characterized in that** it comprises a vehicle signaling and lighting system according to any of claims 7 to 11, the bundle (17) being linked to a management system (20) of the vehicle (1).
